Europäisches Patentamt

European Patent Office

Office européen des brevets

(11) Veröffentlichungsnummer: **0 008 075**
**A1**

## (12) EUROPÄISCHE PATENTANMELDUNG

(21) Anmeldenummer: 79102756.8

(22) Anmeldetag: 01.08.79

(51) Int. Cl.³: **C 03 B 9/02**

(30) Priorität: 03.08.78 DE 2834049

(43) Veröffentlichungstag der Anmeldung: 20.02.80
Patentblatt 80/4

(84) Benannte Vertragsstaaten: **AT BE FR GB IT SE**

(71) Anmelder: **Maschinenfabrik Reinhausen Gebrüder Scheubeck GmbH & Co. KG., Falkensteinstrasse 8, D-8400 Regensburg (DE)**

(72) Erfinder: **Fend, Fritz M., Thurmayerstrasse 11, D-8400 Regensburg (DE)**

(54) Gerät zum Blasen von Glaskörpern.

(57) Gerät zum Blasen von Glaskörpern (11) mit Hilfe einer Pfeife (7). Der Blaseingang der Pfeife (7) ist mittels eines Kupplungsstückes (6) an eine Druckluftquelle (18) anschließbar, wobei zwischen Druckluftquelle (18) und Kupplungsstück (6) eine auf Steuerdruck ansprechende Steuereinrichtung (17) für die Druckluft vorgesehen ist. Der mit dem Steuerdruck beaufschlagbare Eingang dieser Steuereinrichtung (17) ist über eine Verbindungsleitung (16, 28) mit einem veränderbaren Volumen einer Betätigungseinrichtung (29) verbunden. Die Betätigungseinrichtung (29) kann hierbei sowohl aus einem Balg wie auch aus einem Zylinder mit von außen betätigbaren Kolben bestehen.

- 1 -

## Gerät zum Blasen von Glaskörpern

Die Erfindung betrifft ein Gerät zum Blasen von Glaskörpern, z.B. Flaschen, Vasen, Krügen, Gläsern usw. mit Hilfe einer Pfeife, deren eines Ende über ein lösbares Kupplungsstück mit einer Druckluftquelle verbunden werden kann, wobei eine auf einen Steuerdruck ansprechende Steuereinrichtung zwischen der Druckluftquelle und dem Kupplungsstück angeordnet ist und der Eingang der Steuereinrichtung mit dem Steuerdruck beaufschlagt wird.

Hand- bzw. mundgeblasene Glasgegenstände erfreuen sich wegen ihrer hohen Qualität und ihres individuellen Dessins nach wie vor großer Beliebtheit. Allerdings ist das Blasen von Glasgegenständen mit dem Mund mit erheblichen körperlichen Belastungen verbunden, die zu erheblichen körperlichen Schäden bei den Glasbläsern führen können. Bisher wird beim Blasen von Glaskörpern mit dem Mund so verfahren, daß ein als "Pfeife" bezeichnetes Blasrohr mit einem Ende (Arbeitsende) in eine Glasschmelze eingetaucht wird, so daß eine bestimmte Menge an flüssigem Glas an diesem Arbeitsende der Pfeife bzw. Glasmacherpfeife haften bleibt. Durch Blasen mit dem Mund an dem dem Arbeitsende entfernt liegenden anderen Ende der Pfeife (Mundstück) wird dann aus dem am Arbeitsende anhaftenden flüssigen Glas zunächst ein kleiner Kolben erzeugt, und zwar unter ständigem Drehen der hierbei schräg nach oben gehaltenen Pfeife. Die Form des beim Blasen erzeugten Glaskolbens muß dabei durch Absetzen der Glaspfeife vom Mund und durch Zurückführen des Arbeitsendes in den Sichtbereich des Glasbläsers ständig kontrolliert werden, wobei dann die Möglichkeit besteht, mit entsprechenden Werkzeugen den erzeugten Kolben aus noch flüssigem bzw. zähflüssigem Glas von außen her durch Druck in der gewünschten Weise zu verformen. Schon allein das Halten der Pfeife beim Blasen erfordert erhebliche körperliche Anstrengungen bei einer erheblichen Belastung vor allem der Armmuskulatur des Glasbläsers. Ein weiterer Nachteil ist, daß der Glasbläser insbesondere am Beginn des Blasvorganges einen erheblichen Luftdruck mit seiner Lunge aufbringen und dieser Luftdruck über einen erheblichen Zeitraum aufrechterhalten werden muß. Weiterhin ist beim Blasen erforderlich, daß ständig Luft aus der Lunge des Glasbläsers über den Luftkanal der Pfeife in den Hohlraum des geformten Glashohlkörpers bzw. Glaskolbens gefördert wird, wodurch es dem Glasbläser nicht möglich ist, während des Blasvorganges zu atmen. Hierdurch wird die Lunge des Blasbläsers stark beansprucht, was zu erheblichen Lungenschäden (Blählungen) führen kann. Die eigentliche feine Steuerung des Luftdruckes, die zum Erreichen einer bestimmten Form für den hergestellten Glaskolben notwendig ist, wird durch die Backenmuskulatur des Glasbläsers durchgeführt, während die Förderung der Luft sowie der "Grunddruck" der Luft, dem die durch die Backenmuskulatur erzeugten Druckänderungen zur Steuerung der Formgebung des Glaskolbens überlagert sind, ausschließlich durch die Lunge erzeugt werden müssen.

Beim Herstellen insbesondere größerer geblasener Glaskörper sind insgesamt drei verschiedene Glasbläser beteiligt, wobei der erste Glasbläser aus dem am Arbeitsende der Pfeife befindlichen flüssigen Glas zunächst als Vorprodukt einen Kolben mit verhältnismäßig kleinem Durchmesser herstellt. Im Anschluß daran wird die mit diesem kleinen Kolben versehene Pfeife - ggf. nach erneutem Erwärmen bzw. Verflüssigen des Glases von einem zweiten Glasbläser erneut in die Glasschmelze eingetaucht, um auf den bereits hergestellten kleinen Kolben weiteres flüssiges Glas aufzubringen. Dann wird aus diesem kleinen Kolben durch Blasen ein größerer Kolben hergestellt. Im Anschluß daran geht die Pfeife an einen dritten Glasbläser, der nach erneutem Verflüssigen des Glases an der Pfeife das Arbeitsende dieser Pfeife in eine Form einbringt, die Form schließt und dann durch Blasen am Mundstück bei gleichzeitigem Drehen der Pfeife um ihre Längsachse den Glaskolben soweit aufbläst, daß er mit seiner Außenfläche gegen die Wandung der Form anliegt.

Da an ein und derselben Pfeife mehrere Glasbläser arbeiten, besteht hier auch in hohem Maße die Gefahr von Ansteckungen bei Infektionskrankheiten, z.B. bei Grippe und so weiter, so daß bei dem bisherigen Verfahren zum Blasen von Glaskörpern erhebliche Ausfallzeiten auch durch Infektionskrankheiten unvermeidlich sind.

Weiterhin bedeutet das bisherige Verfahren auch eine erhebliche nervliche sowie psychische Belastung für die Glasbläser, da die Arbeitsgänge so schnell durchgeführt werden müssen, daß ein Erstarren des flüssigen Glases zumindesten während eines Arbeitsganges nicht auftritt. Hinzu kommt noch, daß mundgeblasene Glasgegenstände in der Regel in Akkordarbeit hergestellt werden, so daß sich auch hierdurch, bedingt durch die Zusammenarbeit jedes Glasbläsers mit anderen Glasbläsern, erhebliche nervliche und psychische Belastungen ergeben.

Es wurde deshalb bereits ein Gerät vorgeschlagen, mit dem das Blasen von Glaskörpern unter Beibehaltung des hohen Qualitätsstandards, wie er bisher nur bei mundgeblasenen Glaskörpern erreicht werden kann, wesentlich vereinfacht wird und mit welchem nicht nur die Arbeitswelt humanisiert, sondern auch vor allem gesundheitliche Schäden völlig ausgeschlossen werden.

Aufgabe der vorliegenden Erfindung ist es, bei dem eingangs näher bezeichneten Gerät eine weitere Entlastung des Personals beim Glasblasen zu schaffen, und zwar unter Beibehaltung der Möglichkeit einer feinfühligen Steuerung des Steuerdruckes sowie der Formgebung des geblasenen Glaskörpers.

Zur Lösung dieser Aufgabe ist ein Gerät der eingangs geschilderten Art gekennzeichnet durch eine Betätigungseinrichtung mit einer Kammer, die über eine Verbindungsleitung mit dem Eingang der Steuereinrichtung verbunden ist und die zumindest teilweise von einer beweglichen Wand begrenzt wird, sowie durch eine Betätigungsfläche an der Betätigungseinrichtung zum Verschieben der Wand.

Die Betätigungseinrichtung besteht bei der Erfindung im einfachsten Fall aus einem balg- oder ballförmigen Körper aus elastischen und/oder flexiblem Material. Die Betätigungseinrichtung kann jedoch auch von einer Kolben-Zylinderanordnung gebildet sein, wobei dann der Kolben an seinem aus dem zylindervorstehenden Ende eine Betätigungsfläche aufweist bzw. mit einer Betätigungsfläche verbunden ist.

Mit dieser Betätigungseinrichtung, die im wesentlichen einen statischen Steuerdruck für die Steuereinrichtung liefert, ist es möglich, durch Hand- oder Fußbetätigung den Steuerdruck feinfühlig zu regulieren und dadurch die Formgebung des geblasenen Glaskörpers feinfühlig zu beeinflussen, so daß zumindest bei gröberen Glaskörpern bzw. bei der Herstellung der ersten Glaskolben aus der Glasschmelze auf eine Steuerung durch den Mund vollständig verzichtet werden kann. Die feinfühlige Steuerung durch die Betätigungseinrichtung ist vor allem deswegen möglich, weil mit der Betätigungseinrichtung nur ein statischer Steuerdruck erzeugt und keine Luft gefördert werden muß, da die durch die Pfeife in den erzeugten Glashohlkörper strömende Arbeitsluft von der Druckluftquelle geliefert wird. Durch die direkte Betätigung der Betätigungseinrichtung von Hand oder mit dem Fuß kann der Glasbläser den jeweils erzeugten Steuerdruck unmittelbar wahrnehmen, so daß es ihm möglich ist, diesen Steuerdruck und damit dann auch die von der Druckluftquelle gelieferte Arbeitsluft sehr feinfühlig einzustellen.

Bei dem erfindungsgemäßen Gerät wird die Arbeitsluft sowie der Arbeitsdruck für die Pfeife von der Druckluftquelle ge-

- 5 -

0008075

liefert, während die Steuerung des Flusses dieser Arbeitsluft sowie des Druckes der Arbeitsluft durch die Steuereinrichtung mit Hilfe des wesentlich geringeren Steuerdrucks erfolgt. Bei einer Ausführungsform der Erfindung beträgt das Verhältnis Steuerdruck/Arbeitsdruck 1/5. Die Erfindung besitzt den Vorteil, daß der Glasbläser von jeder
körperlichen Anstrengung völlig entlastet ist.

Die die Arbeitsluft aus der Druckluftquelle steuernde Steuereinrichtung weist eine solche Charakteristik auf, daß diese
Steuereinrichtung bei steigendem Steuerdruck am Steuereingang
den Durchfluß für die Arbeitsluft zunehmend öffnet, während
bei fehlendem Steuerdruck der Fluß der Arbeitsluft vollständig oder nahezu vollständig unterbrochen ist.

Bei einer Ausführungsform der Erfindung besteht das Gerät
aus einem Rahmen, auf welchem die Pfeife für den Blasvorgang
etwa waagerecht oder aber in einem spitzen Winkel gegenüber
der Waagerechten geneigt angeordnet werden kann, wobei die
Betätigungseinrichtung im Bereich des Arbeitsendes der Pfeife
angeordnet ist. Hierdurch kann der Glasbläser die Ausbildung
und Formgebung des Glaskolbens beim Blasen ständig beobachten,
d.h. es ist nicht mehr notwendig, den Blasvorgang für die
Überprüfung der Form des Glaskolbens zu unterbrechen. Dadurch läßt sich die für die einzelnen Arbeitsgänge tatsächlich erforderliche Arbeitszeit im Verhältnis zur Abkühlzeit
des Glases wesentlich verkürzen, so daß die Arbeitsvorgänge
mit weniger Hektik durchgeführt werden können.Durch die
Ablage der Pfeife auf dem Rahmen während des Blasvorganges
entfällt auch die bisherige höhere körperliche Belastung
beim Blasen bzw. beim Halten der Pfeife.

Die wesentlichen Vorteile der Erfindung bestehen darin, daß
der hohe Arbeitsdruck sowie die große Menge an Arbeitsluft
nicht mehr durch die Lunge erzeugt werden müssen. Gesundheitliche Schäden des Atmungssystems und vor allem der Lunge
werden vermieden.

Da die tatsächliche Arbeitszeit für einen bestimmten Arbeits-

0008075

vorgang im Vergleich zu der Zeit, in der das Glas erstarrt, wesentlich verkürzt werden kann, werden auch nervliche bzw. psychologische Belastungen vermieden.

Bei der Erfindung ist es auch möglich, zusätzlich zu der Betätigungseinrichtung ein oder mehrere Mundstücke vorzusehen, mit denen dann mit dem Mund der Steuerdruck feinfühlig verändert werden kann. Dies hat den besonderen Vorteil, daß das Blasen gröberer Glaskörper durch Steuerung mit Hilfe der Betätigungseinrichtung erfolgt, während dann die Feinheiten in der Formgebung zum Fertigstellen des Glaskörpers durch Steuerung des Steuerdruckes mit dem Mund erfolgen. In diesem Fall sind die Betätigungseinrichtungen sowie die vorhandenen Mundstücke jeweils über Leitungen (z.B. Schläuche) mit verschiedenen Eingängen eines pneumatischen ODER-Gatters verbunden, an dessen Ausgang ein Steuerdruck dann anliegt, wenn durch die Betätigungseinrichtung und/oder durch Hineinblasen in ein Mundstück ein Steuerdruck an einem Eingang des pneumatischen ODER-Gatters erzeugt wird.

Weiterbildungen der Erfindung sind in den Unteransprüchen beschrieben.

Die Erfindung wird im folgenden anhand der Figuren an einem Ausführungsbeispiel näher erläutert. Es zeigen:

Figur 1 in perspektivischer Darstellung eine Ausführungsform des erfindungsgemäßen Gerätes zusammen mit einer im Gerät angeordneten Pfeife zum Blasen von Glaskörpern;

Figur 2 ein Blockschaltbild des Gerätes gemäß Figur 1;

Figur 3 in Detaildarstellung im Schnitt das Kupplungsstück zur Verwendung bei dem Gerät gemäß Figur 1;

Figur 4 einen Querschnitt durch den Querträger des Gerätes gemäß Figur 1 sowie durch die auf der Ablage angeordnete Pfeife.

Das in den Figuren dargestellte Gerät besteht aus einem Rahmen 1, der von einem Querträger 2 sowie zwei am Querträger befestigten und nach unten vom Querträger wegstehenden Füßen 3 gebildet ist. Der Querträger 2 ist bei der dargestellten Ausführungsform ein U-Profileisen mit zwei senkrecht verlaufenden Schenkeln 4 und einer diese Schenkel miteinander verbindenden, waagerecht verlaufenden Jochfläche 5. Die Schenkel 4 ragen mit ihren freien Kanten nach unten, so daß die Jochfläche 5 mit ihrer, den freien Kanten der Schenkel 4 abgewandten Oberseite eine ebene Fläche des Querrahmens 2 bildet. An einem Ende des Querträgers 2 ist an der Oberseite der Jochfläche 5 ein Kupplungsstück 6 für die Pfeife 7 befestigt, während im Bereich des anderen Endes des Querträgers 2 ebenfalls an der Oberseite der Jochfläche 5 eine von zwei Rollen 8 gebildete Ablage für die Pfeife 7 vorgesehen ist.

Das Kupplungsstück 6 sowie die beiden Rollen 8 sind jeweils um waagerechte, sich in Längsrichtung des Querträgers 2 erstreckende Achsen drehbar an diesem Querträger befestigt, wobei zur Halterung des Kupplungsstückes 6 ein Lagerelement 9 und zur Halterung der Rollen 8 ein Lagerelement 10 dient und diese Lagerelemente 9 bzw. 10 in geeigneter Weise mit dem Querträger 2 verbunden sind. Die Rollen 8 bzw. deren Drehachsen weisen einen solchen Abstand voneinander auf, daß die von oben auf die Rollen 8 aufgelegte Pfeife 7 zwischen den beiden Rollen 8, jedoch oberhalb der Drehachse dieser Rollen liegt, so daß die Pfeife 7 von den Rollen 8, die bei dem dargestellten Ausführungsbeispiel gleichen Durchmesser aufweisen, seitlich geführt wird. Die mit dem Kupplungsstück 6 verbundene und auf den Rollen 8 aufliegende Pfeife 7 kann von Hand um die Pfeifenlängsachse gedreht werden, um so die Form des am Arbeitsende der Pfeife 7 sich ausbildenden Kolbens 11 aus flüssigem Glas zu beeinflussen.

Die Achse der mit dem Kupplungsstück 6 verbundenen Pfeife 7 liegt bei der dargestellten Ausführungsform in etwa horizontal. Es ist jedoch auch möglich, die Anordnung so zu treffen, daß diese Achse gegenüber der Horizontalen geneigt ist. In diesem Fall ist dann zumindest auch die Drehachse des Kupplungsstückes 6 gegenüber der Horizontalen entsprechend geneigt. Die Anordnung des Kupplungsstückes 6 sowie die Länge des Querträgers 2 sind weiterhin so gewählt, daß die Pfeife 7 mit ihrem Arbeitsende, an welchem der Glaskolben 11 erzeugt wird, über das dem Kupplungsstück 6 abgewandte Ende des Querträgers 2 vorsteht. An diesem Ende des Querträgers 2 sind bei der dargestellten Ausführungsform zwei Mundstücke 12 vorgesehen, die im einfachsten Fall jeweils von einem Röhrchen aus Metall oder Kunststoff gebildet sind, und die an einem seitlich vom Querträger 2 wegstehenden Träger 13 befestigt sind. Die Mundstücke 12, die über die Unterseite des Trägers 13 vorstehen und am Träger 13 vorzugsweise so befestigt sind, daß die oberen freien Enden der Mundstücke 12 in der Höhe eingestellt werden können, sind mit ihren unteren Enden über Schläuche 14 mit den beiden Eingängen eines pneumatischen ODER-Gatters 15 verbunden, dessen Ausgang über eine Leitung bzw. über einen Schlauch 16 mit dem Steuereingang eines durch Durck betätigbaren Ventils 17 verbunden ist. Unter "ODER-Gatter" wird hier eine Einrichtung verstanden, die an ihrem Ausgang einen Steuerdruck für das Ventil 17 liefert, wenn wenigstens an einem der beiden Mundstücke 12 durch Hineinblasen von Luft ein Druck erzeugt wird.

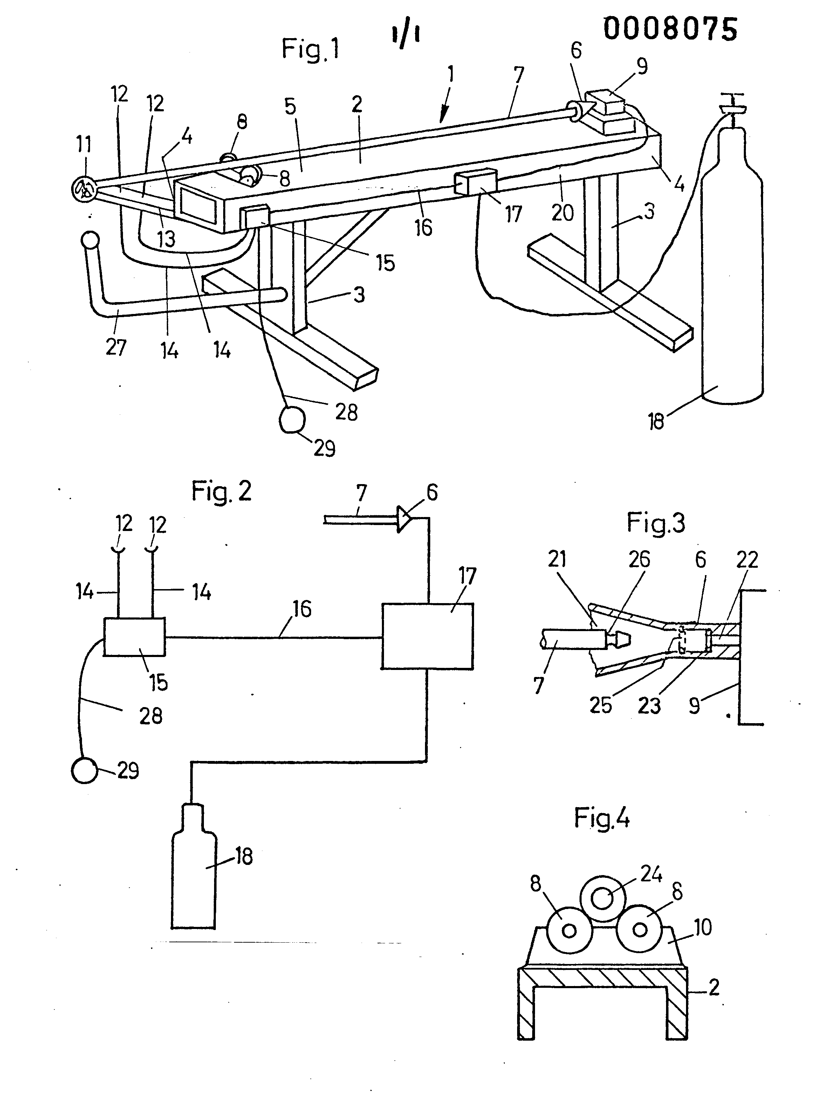

Das Steuerventil 17 liegt in der Verbindung zwischen einer Druckluftquelle 18, die in der Figur 1 als Preßluftflasche dargestellt ist, und dem Kupplungsstück 6. Zu diesem Zweck ist die Druckluftquelle 18 über einen Schlauch 19 mit dem Eingang des Steuerventils 17 verbunden, während der Ausgang des Steuerventils 17 über eine Leitung oder über einen Schlauch 20 an das Kupplungsstück 6 angeschlossen ist.

Es ist selbstverständlich auch möglich, anstelle der Druckluftflasche eine andere Druckluftquelle, z.B. einen Kompressor usw. zu verwenden, wobei es zweckmäßig ist, dem Steuerventil 17 eine Ventileinrichtung vorzuschalten, mit der der Druck der Druckluftquelle 18 auf den gewünschten Arbeitsdruck reduziert bzw. mit der ein konstanter Arbeitsdruck erzeugt wird.

Die Charakteristik des Steuerventils 17 ist so, daß bei

0008075

fehlendem Steuerdruck in der Leitung 16 der Luftfluß von
dem Schlauch 19 durch das Steuerventil 17 in die Leitung
20 vollständig unterbrochen ist, während dieser Luftfluß
von der Druckluftquelle 18 an das Kupplungsstück 6 mit
steigendem Steuerdruck in der Leitung 16 zunimmt. Bei einer
bevorzugten Ausführungsform ist der in der Leitung 16 und
damit auch an den Mundstücken 12 erzeugte Steuerdruck etwa
1/5 des Arbeitsdruckes in der Leitung 20.

Das Kupplungsstück 6 weist, wie insbesondere der Figur 3
zu entnehmen ist, eine Öffnung 21 zum Einführen des einen
Endes der Pfeife 7 auf, wobei diese Einführöffnung so ausgebildet ist, daß sie sich zu ihrem freien Ende hin kegel-
bzw. trichterförmig erweitert, wodurch das Einführen der
Pfeife 7 wesentlich erleichtert wird. Das innere Ende der
Einführöffnung 21 geht in einem Kanal 22 über, der über geeignete, nicht näher dargestellte Mittel, die ein Drehen des
Kupplungsstückes 6 um die waagerechte Achse ermöglichen, mit
der Leitung 20 verbunden ist. Am Ende des Kanales 22 ist
innerhalb der Einführöffnung 21 eine ringförmige Dichtung 23
angeordnet, gegen welche das in die Einführöffnung 21 eingeführte Ende der Pfeife 7 so anliegt, daß eine nach außen
hin dichte Verbindung zwischen dem Kanal 22 und dem Luftkanal 24 hergestellt wird, welch letzterer sich von dem
mit dem Kupplungsstück 6 verbundenen Ende zu dem Arbeitsende durch die Pfeife 7 hindurcherstreckt. Zum Verriegeln
der Pfeife 7 im Kupplungsstück 6 ist an diesem Kupplungsstück weiterhin ein federndes Rastelement 25 vorgesehen,
welches bei in die Einführöffnung 21 eingeführter Pfeife 7
in eine Ringnut 26 der Pfeife 7 einrastet. Bei der dargestellten Ausführungsform besteht das Rastelement 25 aus
einem Bügel aus Federdraht, der mit seinen beiden
Schenkeln in durchgehende Nuten in der die Einführöffnung
21 begrenzenden Wandung derart angeordnet ist, daß die
Schenkel dieses Bügels in einem Teilbereich in das Innere
der Einführöffnung 21 hineinragen und dadurch mit der Ringnut 26 bei vollständig in das Kupplungsstück 6 eingeführter
Pfeife 7 einrasten können.

Über einen Schlauch 28 ist mit einem der Eingänge des
ODER-Gatters eine Betätigungseinrichtung 29 verbunden,
die bei der dargestellten Ausführungsform von einem balg-
oder ballförmigen Körper gebildet wird. Dieser Körper besteht aus elastischem und/oder flexiblem Material, z.B.
aus Gummi und kann von Hand zusammengedrückt werden, wodurch
sich der Innenraum des Körpers 29 verkleinert und dadurch
über den Schlauch 28 an dem betreffenden Eingang des ODER-
Gatters ein Steuerdruck erzeugt wird, der zu einem Steuerdruck in der Leitung 16 führt.

Selbstverständlich ist es möglich, anstelle des balg- oder
ballförmigen Körpers 29 auch eine andere, gleichartig wirkende Betätigungseinrichtung vorzusehen, die eine Kammer aufweist, welche zumindest teilweise durch eine bewegliche
Wand oder Membran verkleinert werden kann.

Die Arbeitsweise des in den Figuren dargestellten Gerätes
gemäß der vorliegenden Erfindung läßt sich, wie folgt, beschreiben:

Zum Blasen eines Gegenstandes aus Glas wird die Pfeife 7
zunächst mit ihrem Arbeitsende in die Glasschmelze eingetaucht und dabei so bewegt, daß eine erforderliche Menge
an flüssigem Glas am Arbeitsende der Pfeife 7 haften bleibt.
Nun wird die Pfeife 7 mit ihrem anderen Ende in das Kupplungsstück 6 eingeschoben und dabei gleichzeitig auf die Rollen 8
aufgelegt. Durch Blasen in eines der Mundstücke 12 oder durch
Zusammendrücken des balg- oder ballförmigen Körpers 29 wird
über den hierbei erzeugten Steuerdruck in der Leitung 16
das Steuerventil 17 betätigt, wodurch in Abhängigkeit vom
Steuerdruck in der Leitung 16 ein Luftfluß aus der Druckluftquelle 18 an das Kupplungsstück 6 und von diesem durch den
Luftkanal 24 an das Arbeitsende der Pfeife 7 erzeugt wird.
Hierdurch entsteht aus dem am Arbeitsende 7 der Pfeife vorhandenen Glasbatzen durch Blasen ein Hohlkörper, dessen Formgebung und Größe durch entsprechendes Drehen der Pfeife 7 um
die waagerechte Achse sowie durch entsprechendes Modulieren
des Steuerdrucks am Mundstück12 bzw. am balg- oder ballförmigen Körper 29 bestimmt werden kann. Selbstverständlich ist es dabei auch möglich, die Formgebung des geblasenen Glaskörpers zusätzlich noch von außen her durch geeignete Werkzeuge zu beeinflussen, wie sie bisher schon beim Glasblasen Verwendung finden. Allerdings hat das erfindungsgemäße Gerät den Vorteil, daß sowohl die Mundstücke 12 als auch der balg- oder ballförmige Körper 29, mit denen über das Steuerventil 17 der Fluß der Arbeitsluft aus der Druckluftquelle 18 an das Arbeitsende der Pfeife 7 beeinflußt werden kann, in unmittelbarer Nähe dieses Arbeitsendes der auf dem Rahmen 1 liegenden Pfeife angeordnet sind, so daß die Beeinflussung der Form des geblasenen Glaskörpers ohne Unterbrechung des Blasvorganges und vor allem auch ohne Absetzen der Pfeife 7 möglich wird, wodurch der Arbeitsvorgang wesentlich vereinfacht und beschleunigt wird. Sobald der geblasene Glaskörper die gewünschte Form erreicht hat, kann er durch aus dem Rohr 27 austretende Kühlluft abgekühlt werden, um ein Erstarren des flüssigen Glases zu erreichen. Das Rohr 27, dessen freies Ende unterhalb des Arbeitsendes der Pfeife 7 angebracht ist und nach oben gerichtet ist, ist zu diesem Zweck mit einer geeigneten, nicht näher dargestellten Quelle für Kühlluft verbunden. Es ist selbstverständlich möglich, daß die dem Rohr 27 zugeführte Kühlluft aus der gleichen Druckluftquelle stammt, die auch die Arbeitsluft zum Blasen des Glaskörpers bzw. Glaskolbens 11 liefert. Weiterhin ist es bei dem erfindungsgemäßen Gerät auch möglich, daß aus dem Rohr 27 ständig Kühlluft austritt und dadurch bereits beim eigentlichen Blasvorgang bzw. beim Blasen des Glaskörpers 11 eine Kühlwirkung eintritt. Dies ist bei dem erfindungsgemäßen Gerät deswegen möglich, weil der gesamte Arbeitsvorgang so schnell ablaufen kann, daß trotz der ständig aus dem Rohr 27 austretenden Kühlluft der Blasvorgang beendet werden kann, bevor das Glas am Arbeitsende der Pfeife erstarrt.

Die Erfindung wurde voranstehend an einem Ausführungsbeispiel beschrieben. Es versteht sich, daß Abwandlungen sowie Änderungen möglich sind, ohne daß dadurch der der Erfindung zugrundeliegende Gedanke verlassen wird.

- 1 -                                    0008075

Patentansprüche:

1. Gerät zum Blasen von Glaskörpern mit Hilfe einer Pfeife, die über ein lösbares Kupplungsstück mit einer Druckluftquelle verbunden werden kann, wobei eine auf einen Steuerdruck ansprechende Steuereinrichtung zwischen der Druckluftquelle und dem Kupplungsstück vorgesehen ist und der Steuerdruck dem Eingang der Steuereinrichtung zugeführt wird, gekennzeichnet durch eine Betätigungseinrichtung (29) mit einer Kammer, die über eine Verbindungsleitung (28) mit dem Eingang der Steuereinrichtung (17) verbunden ist und die zumindest teilweise von einer beweglichen Wand begrenzt wird, sowie durch eine Betätigungsfläche zum Verschieben der Wand.

2. Gerät nach Anspruch 1, dadurch gekennzeichnet, daß die Betätigungseinrichtung ein balg- oder ballförmiger Körper (29) aus elastischem und/oder flexiblem Material ist.

3. Gerät nach Anspruch 2, dadurch gekennzeichnet, daß der balg- oder ballförmige Körper (29) aus Gummi besteht.

4. Gerät nach Anspruch 1, dadurch gekennzeichnet, daß die Betätigungseinrichtung aus einem Zylinder mit Kolben besteht.

5. Gerät nach Anspruch 4, dadurch gekennzeichnet, daß der Kolben an seinem aus dem Zylinder vorstehenden Ende eine Betätigungsfläche aufweist.

6. Gerät nach einem der Ansprüche 1 bis 5, dadurch gekennzeichnet, daß bei Verwendung von Mundstücken (12) zum Erzeugen des Steuerdrucks die Mundstücke (12) sowie die Betätigungseinrichtung (29) jeweils mit verschiedenen Eingängen eines pneumatischen ODER-Gatters (15) verbunden sind.

0008075

Fig.1

Fig. 2

Fig.3

Fig.4

Europäisches
Patentamt

**EUROPÄISCHER RECHERCHENBERICHT**

0008075
Nummer der Anmeldung

EP 79 102 756.8

| Kategorie | EINSCHLÄGIGE DOKUMENTE | | KLASSIFIKATION DER ANMELDUNG (Int.Cl.3) |
|---|---|---|---|
| | Kennzeichnung des Dokuments mit Angabe, soweit erforderlich, der maßgeblichen Teile | betrifft Anspruch | |
| | GB - A - 894 474 (ASSOCIATED ELECTRICAL INDUSTRIES) <br> * Seite 2, Zeilen 20 bis 25 * <br> -- | 1-3 | C 03 B  9/02 |
| | US - A - 3 429 683 (W.F. JEHN) <br> * Ansprüche 1 bis 3 * <br> -- | 1 | |
| A | DE - B - 2 139 160 (KNORR-BREMSE) <br> * ganzes Dokument * <br> -- | 6 | **RECHERCHIERTE SACHGEBIETE (Int. Cl.3)** <br><br> C 03 B  9/00 |
| A | US - A - 3 052 064 (R.S. KAESER) <br> -- | | |
| A | DE - C - 126 251 (AUTOMATIC GLASS BLOWING PATENTS SYNDICATE) <br> ----- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 22-10-1979 | HÖRNER |

EPA form 1503.1  06.78